Europäisches Patentamt

(19) European Patent Office

Office européen des brevets

(11) Publication number: **0 117 710**
**A2**

## (12) EUROPEAN PATENT APPLICATION

(21) Application number: **84301113.1**

(22) Date of filing: **21.02.84**

(51) Int. Cl.³: **B 21 D 53/04**

(30) Priority: **25.02.83 CA 422469**

(43) Date of publication of application: **05.09.84**
**Bulletin 84/36**

(84) Designated Contracting States: **DE FR IT**

(71) Applicant: **ALCAN INTERNATIONAL LIMITED,**
**1188 Sherbrook Street West, Montreal Quebec**
**H3A 3G2 (CA)**

(72) Inventor: **Fulton, Clarence William, 216 Overton Place,**
**Oakville Ontario (CA)**

(74) Representative: **Pennant, Pyers et al, Stevens, Hewlett &**
**Perkins 5 Quality Court Chancery Lane, London,**
**WC2A 1HZ (GB)**

(54) **Roll bonded tubing for brazed articles.**

㉗ The invention relates to a method of making a metallic strip-type composite article adapted for expansion by the application of internal pressure to provide a plurality of tubular passageways therein. This method comprises providing a pattern of weld inhibiting or stop-weld material between two superimposed strips of metal and pressure welding these strips together so that the adjacent areas of the strips which are not separated by the stop weld material become bonded together, forming the composite article. The outer surfaces of these two metal strips are provided with a clad layer of brazing alloy. At any suitable time after the bonding, the areas defined by the pattern of weld inhibiting or stop-weld material may be expanded in the composite article to form multi-holed strip-type tubing clad with brazing alloy. The novel multi-holed strip-type tubing clad with brazing alloy can be used for producing heat exchanger assemblies and other products in which a brazed form of construction is used.

-1-

## Roll Bonded Tubing For Brazed Articles

This invention relates to a roll-bond method for forming metal strip-type tubing, particularly multi-holed tubing, of the type typically used in automobile condenser and evaporator heat exchanger units. The invention also relates to a multi-holed tubing clad with brazing alloy.

It has been known for many years to use a hot rolling technique to form tubular components for refrigerator heat exchangers and the like. For instance, Grenell U.S. 2,690,002 describes a process in which a pattern of separation material is applied to a clean surface of a sheet of metal. A clean surface of a second sheet of metal is superimposed on this surface and the two sheets are secured to prevent relative movement and are welded together by hot rolling in the adjacent areas thereof which are not separated by the separation material. The unjoined portion is expanded by injecting therein a fluid under pressure of sufficient magnitude to permanently distend the blank in the areas of the unjoined portion.

Condensers and evaporators for automobile applications often consist of a plurality of passes of tubing wound in a serpentine configuration with corrugated, flat fin stock bonded to the tubing surfaces of adjacent passes. An arrangement of this type is described in Tranel U.S. 3,839,975. In the arrangement of this patent, the multi-holed tubing is produced by a roll-bond method and the brazing of the assembly is effected by a brazing alloy material being present as a clad layer on the fin stock material. This technique has never been adopted by the industry and generally the industry still uses extruded rather than roll-bonded multi-holed tubing. Again with this extruded tubing, the brazing of the assembly is often effected by the brazing alloy material being present as a clad layer on the fin stock material, since the extruded tubing cannot be clad with brazing alloy.

It is the object of the present invention to be able to produce by a pressure bonding technique a multi-holed strip-type tubing clad with a brazing alloy which will be acceptable to industry for producing heat exchanger assemblies and other products in which a brazed form of construction is used.

Summary of the Invention

One feature of the present invention is a continuous method of making a metallic strip-type composite article adapted for expansion by the application of internal pressure to provide a plurality of tubular passageways extending longitudinally therein such that in any length of said article each of said passageways has an entrance opening and an exit opening respectively disposed at opposite ends of said length. This method comprises providing a pattern of weld inhibiting or stop-weld material between two superimposed strips of metal and pressure welding these strips together so that the adjacent areas of the strips which are not separated by the stop weld material become bonded together, forming the composite article. The outer surfaces of these two metal strips are provided with a clad layer of brazing alloy. At any suitable time after the bonding, the areas defined by the pattern of weld inhibiting or stop-weld material may be expanded in the composite article to form multi-holed strip-type tubing clad with brazing alloy.

The pattern of weld inhibiting or stop-weld material may be applied directly to one face of one of the two strips of metal or it may be applied to a foil interposed between the two strips of metal. Any conventional weld-inhibiting material may be used, such as graphite, titanium dioxide, etc.

The clad layers of brazing alloy may be applied to the outer faces of the two metal strips at some point before the two strips have been superimposed, or the two metal strips may be superimposed in a non-clad form and the cladding may be carried out thereafter.

The invention also relates to the composite article clad with brazing alloy produced by the above method and adapted for expansion by the application of internal pressure to provide a plurality of tubular passageways therein.

According to another feature of the invention, it is also possible to provide a corrosion protection layer on the interior wall of the multi-holed tubing. This can be done by including a layer of corrosion protection alloy on the inner face of each of the two parent alloy strips and applying a pattern of stop-weld material to take effect between the two corrosion protection layers when these are bonded together. As in the case of brazing alloy, these layers may be applied to the parent alloy strip either before roll-bonding or during the roll-bonding operation.

The clad multi-holed tubing of the present invention is particularly useful in the manufacture of brazed air conditioning evaporators and condensers. Very substantial savings in weight as well as in cost of product can be achieved using the technique of this invention. For example, the use of clad multi-holed tubing of the present invention in place of the usual multi-holed extrusions has provided weight savings of 36-46% in some typical automotive heat exchangers. This has been accomplished with very little loss of heat exchange efficiency.

Certain preferred features of the present invention are illustrated by the attached drawings in which:

Figure 1 is a perspective view of a typical condenser application of the tubing produced by the present invention;

Figure 2 is a schematic illustration of an apparatus for continuously forming a composite article according to this invention;

Figure 3 is a schematic illustration of an apparatus for converting a roll of composite article of the invention into sections of expanded multi-holed tubes; and

Figure 4 is a schematic illustration of another apparatus for forming the composite article.

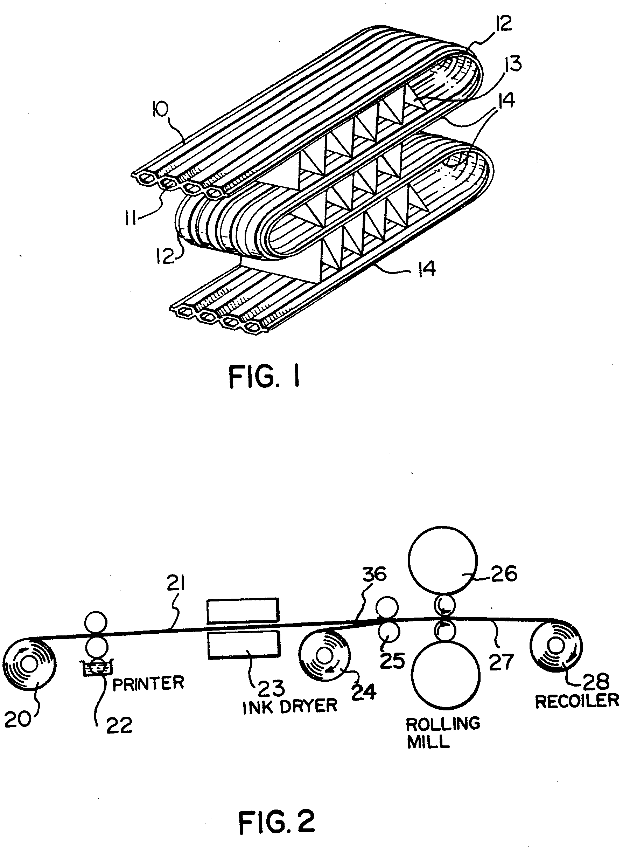

Figure 1 shows a typical multi-holed tubing according to the invention bent and brazed into a typical condenser application. As will be seen from Figure 1, the multi-holed tubing 10 having individual passageways 11 is bent into a serpentine configuration by way of bends 12. A convoluted flat fin stock 13 is affixed to the tubing 10 between the adjacent passes 14. The outer surfaces of the tubing 10 are clad by a layer of brazing alloy and this permits furnace brazing of the convoluted strips 13 to the passes 14 of the multi-holed tubing 10.

A typical procedure for forming a non-expanded composite article according to the invention is shown in Figure 2. Two coils of aluminum alloy 20 and 24 are used and these can typically be aluminum alloy AA3003 (alloy designation of the Aluminum Association) clad on one side with aluminum-silicon alloy, such as AA4343. In the process, the non-clad faces of the coils are cleaned and scratch brushed and a multiple linear pattern of a fine colloidal graphite suspension is printed onto strip 21 by means of roller-type printer 22. The printed strip passes through heater 23 and is then combined with strip 36 from coil 24 before pinch rolls 25. This combination is roll-bonded by means of rolling mill 26 and the composite article 27 thus obtained is recoiled to form coil 28.

This composite article 27 must eventually be expanded and cut into lengths of multi-holed tubing and this can be done at the same location as the first stage or at some totally remote location.

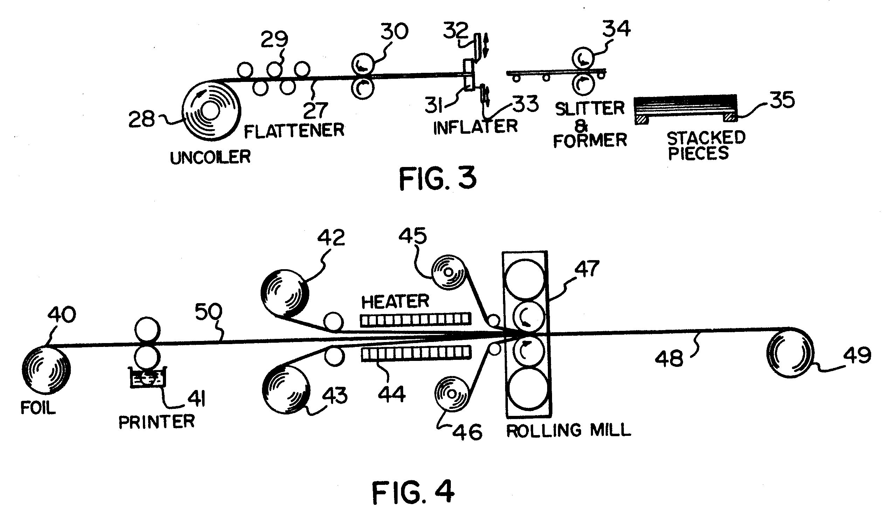

The inflation and cutting procedure is shown in Figure 3 in which a strip 27 of the bonded composite article is unwound from coil 28 by the driven pinch rolls 30 and straightened and flattened in flattener 29. The strip is clamped in shaped clamp 31, end sheared by shear 32 and the individual passageways are opened and these are connected to an inflation device 33. Air at high pressure, e.g. 6.9 MPa, inflates the length of tubes back to the pinch rolls 30 after which the air is turned off and the inflated strip is fed forward through the slitter 34, where it is simultaneously roll formed to give the flattened shape on the tubes required for brazing to fins. The expanded and cut portions are stacked in collector 35. These can then be used by passing them through a serpentine bender, ready to be manufactured into evaporators, condensers, or other heat exchangers. The clad pieces of multi-holed tubing are easily brazed to convoluted fins made from a bare aluminum alloy sheet of, for example, AA3003.

Another procedure for forming the composite article of this invention is illustrated in Figure 4. In this embodiment the procedure begins with a coil of aluminum foil 40, e.g. AA1100 or AA7072 alloy. This foil is uncoiled and a pattern of weld inhibiting or stop-weld material is printed on the foil by means of roller-type printer 41. On each side of this printed on foil are mounted coils 42 and 43 of an aluminum alloy, such as AA3003. These are both uncoiled with the printed-on foil interposed therebetween and the composite of the foil and the two aluminum alloy layers pass through heater 44. Coils 45 and 46 carry a brazing alloy, such as AA4343, and these are both uncoiled with the three layer composite between them. The five layer composite then passes through the rolling mill 47 where roll bonding takes place. The clad composite strip article 48 is then recoiled as coil 49.

In an alternative procedure, two additional coils are provided between aluminum foil coil 40 and AA3003 coils 42 and 43. These additional coils are corrosion protection alloy, such as AA7072, and are applied on each side of the printed-on strip 50. This means that a seven layer composite is formed having the following layers proceeding

from top to bottom:

1.  brazing alloy (AA4343)
2.  parent alloy (AA3003)
3.  corrosion protection alloy (AA7072)
4.  intermediate foil (AA7072)
5.  corrosion protection alloy (AA7072)
6.  parent alloy (AA3003)
7.  brazing alloy (AA4343)

It will be understood that the aluminum alloys mentioned above represent only typical examples of those that can be used in the invention. It will furthermore be understood that both the roll-bonding and inflating can be carried out at either room temperature or at elevated temperatures.

The invention is more particularly illustrated in the following examples which are intended for purposes of illustration only and are not to be construed as limitations of the scope of the present invention.

Example 1

Two strips of AA1100 aluminum alloy each having a thickness of about 1.9 mm were used as parent alloy. These were cleaned and scratch brushed and a multiple linear pattern of a fine colloidal graphite suspension was applied to the surface of one strip as "stop-weld" using a silk screen printer. The two strips were then superimposed to form a composite with the stop-weld pattern interposed therebetween.

Then two layers of AA4343 brazing alloy each having a thickness of about 0.5 mm were applied, one to each side of the above composite, to form a four layer composite. This four layer composite was passed through a rolling mill and compressed to a total thickness of about 1.1 mm, thereby metallurgically bonding the four layer composite into an integrally bonded strip.

Thereafter, the bonded strip was inflated by injecting compressed air into the stop-weld pattern by a known technique, such as that described in Keith, USP 3,667,266, issued June 6, 1972. The multi-holed panel obtained was flattened and then passed through a serpentine bender and formed into a serpentine configuration with a series of parallel passes. Between adjacent passes were placed fins made from AA3003 aluminum alloy sheet and having a convoluted or accordian configuration. The fins were then furnace brazed to the multi-holed panel to form a simulated condenser component.

Example 2

The procedure of Example 1 was followed except that no separate layers of brazing alloy were used and in place of the AA1100 strips there were used two strips of aluminum alloy AA3003 pre-clad with AA4343 brazing alloy, the printing being on one of the AA3003 faces. Thus, the composite which was passed through the rolling mill was a two layer composite.

Example 3

Again using the procedure of Example 1, the integrally bonded strip was formed from a three layer composite. In this case, the tubular pattern of fine colloidal graphite suspension was printed on a thin foil of AA1100 aluminum and on each side of the foil was placed a strip of AA1100 aluminum pre-clad with AA4343 brazing alloy.

Claims:

1.  A continuous method of making a metallic strip-type composite article adopted for expansion by the application of internal pressure to provide a plurality of tubular passageways extending longitudinally therein such that in any length of said article each of said passageways has an entrance opening and an exit opening respectively disposed at opposite ends of said length, which comprises interposing a weld inhibiting material between two superimposed strips of metal in a pattern corresponding to said longitudinally extending fluid passageways and pressure welding said strips together so that the adjacent areas of the strips which are not separated by the weld inhibiting material become bonded together forming the composite article, characterized in that the outer surfaces of said two metal strips are provided with a clad layer of brazing alloy.

2.  The method of claim 1 wherein said strips of metal are selected from the groups consisting of aluminum and alloys thereof.

3.  The method of claim 2 wherein the areas defined by said pattern of weld inhibiting material are expanded in said composite article to form multi-holed strip-type tubing.

4.  The method of claim 1 wherein the pattern of weld inhibiting material is applied to a foil interposed between said two strips of metal.

5.  The method of claim 1 wherein the pattern of weld inhibiting material is applied to one face of one of said two strips of metal.

6.  The method of claim 1 wherein the clad layers of brazing alloy are applied to the outer faces of said two metal strips after the two strips have been superimposed.

7.  The method of claim 2 wherein the strips of metal are uncoiled from coils and the composite article formed is recoiled into a coil.

8. The method of claim 7 wherein the recoiled composite article is subsequently uncoiled, the areas defined by said pattern of weld inhibiting material are expanded and the multi-holed tubing obtained is cut into lengths.

9. A composite article adapted for expansion by the application of internal pressure to provide a plurality of tubular passageways extending longitudinally therein such that in any length of said article each of said passageways has an entrance opening and an exit opening respectively disposed at opposite ends of said length, comprising a pair of superimposed strips of metal (21, 36) integrally joined with a weld inhibiting material interposed therebetween in a pattern corresponding to said longitudinally extending fluid passageways, whereby the integral joining occurs in the areas of the strips which are not separated by the weld inhibiting material, characterized in that the outer surfaces of said metal strips (21, 36) are provided with a clad layer of brazing alloy.

10. The composition article of claim 9 wherein said pair of metal strips are selected from the group consisting of aluminum and alloys thereof.

11. The composite article of claim 10 wherein the areas of the strips separated by the weld inhibiting material are expanded forming multi-holed strip-type tubing (10).

12. A multi-holed strip-type tubing according to claim 11 bent into a serpentine configuration with a series of parallel passes (14) between the bends (12) and convoluted strips of metallic fins (13) brazed between adjacent passes (14) of said tubing.

13. A multi-holed strip-type tubing according to claim 12 wherein the fins are aluminum alloy sheet without brazing alloy cladding.

FIG. 1

FIG. 2

FIG. 3

FIG. 4